# EUROPÄISCHE PATENTSCHRIFT

(11) **EP 0 647 890 B1**
(45) Veröffentlichungstag und Bekanntmachung des Hinweises auf die Patenterteilung: **10.06.1998**
(21) Anmeldenummer: 93116453.7
(22) Anmeldetag: 11.10.1993
(51) Int. Cl.: G05B 19/05

(54) **Verarbeitungsmodul für ein modulares Automatisierungssystem**
Processing module for a modular automation system
Module de calcul pour un système d'automatisation modulaire

(43) Veröffentlichungstag der Anmeldung: 12.04.1995
(60) Teilanmeldung: 94112149.3
(73) Patentinhaber: SIEMENS AKTIENGESELLSCHAFT, 80333 München (DE)
(72) Erfinder: Barthel, Herbert, Dipl.-Ing., D-91074 Herzogenaurach (DE); Daar, Horst, Dr.-Ing., D-91058 Erlangen (DE); Schütz, Hartmut, Dipl.-Ing., D-91336 Heroldsbach (DE)

(56) Entgegenhaltungen:
- EP-A- 0 109 734
- EP-A- 0 130 269
- US-A- 4 365 312
- US-A- 4 442 504
- US-A- 4 870 564
- SIEMENS ENERGY & AUTOMATION, Bd.12, Nr.3, BERLIN DE Seiten 6 - 7, XPSER: SIEME RICHARD FISCHER 'FAULT TOLERANT PLC'S ELIMINATE PRODUCTION STANDSTILL'
- ENGINEERING AND AUTOMATION, Bd.13, Nr.4, BERLIN DE Seiten 8 - 12, XPSER: ENGIN H. KIESEWALTER & A. POLANSKY 'RECHNERGESTEUERTE ROLLFÜHRUNGSSYSTEME VERBESSERN KAPAZITÄTSAUSLASTUNG AUF FLUGHÄFEN'
- ELEKTRONIK, Bd.33, Nr.6, März 1984, MUNCHEN DE Seite 128 'uP PASST AUF SPS AUF'
- AUTOMATISIERUNGSTECHNISCHE PRAXIS - ATP, Bd.33, Nr.5, Mai 1991, MUNCHEN DE Seiten 234 - 239 M. HOFFMAN 'SPEICHERPROGRAMMIERBARE STEUERUNGEN FÜR DIE PROZESSLEITTECHNIK: BEDEUTUNG, STATUS, ANFORDERUNGEN, TRENDS'

## Beschreibung

Die vorliegende Erfindung betrifft ein Verarbeitungsmodul für ein modulares Automatisierungssystem, z. B. eine modulare speicherprogrammierbare Steuerung, wobei das Automatisierungssystem aus einer Zentraleinheit und der Zentraleinheit untergeordneten Peripherieeinheiten, z. B. Ein-/Ausgabebaugruppen, besteht, wobei die Peripherieeinheiten über einen Gerätebus miteinander koppelbar sind, wobei das Verarbeitungsmodul einen Prozessor, einen Speicher, ein sperrbares Buskoppelelement und ein sperrbares Zentralkoppelelement aufweist, wobei der Prozessor, der Speicher und die Koppelelemente über einen verarbeitungsmodulinternen Modulbus miteinander verbunden sind und das Buskoppelelement an den Gerätebus und das Zentraleinheitkoppelelement an die Zentraleinheit ankoppelbar ist.

Das von der SIEMENS AG angebotene Automatisierungsgerät S5-115 U ist ein modulanes Automatisierungssystem, dessen konstruktive Details beispielsweise aus der DE 34 18 844 C2 bekannt sind. Bei diesem Automatisierungssystem nimmt die Zentraleinheit außer der Abarbeitung des Anwenderprogramms noch eine Vielzahl anderer Aufgaben wahr, z. B. den Test und die Überwachung der mit der Zentraleinheit verbundenen Peripherieeinheiten. Dadurch steht die Zentraleinheit nicht ausschließlich zur Abarbeitung des Anwenderprogramms zur Verfügung. Bei redundanten Automatisierungssystemen erfolgt auch die Synchronisation und der Datenabgleich über die Zentraleinheit. Die Leistungsfähigkeit des Automatisierungssystems wird dadurch negativ beeinflußt.

Aus der US-A 4 442 504 ist ein modulares Automatisierungssystem bekannt, bei dem zwischen der Zentraleinheit und den Peripheriebaugruppen eine Schnittstelleneinheit angeordnet ist. Sie dient u. a. der Überwachung und dem Test der Peripheriebaugruppen.

Die (gegenseitige) Überwachung von Zentraleinheiten ist im Stand der Technik nur bei redundanten Automatisierungssystemen möglich. Diese Überwachung ist aufwendig und kostenintensiv.

Die Aufgabe der vorliegenden Erfindung besteht darin, eine einfache und kostengünstige Möglichkeit zu schaffen, um die Zentraleinheit auf ordnungsgemäßes Arbeiten zu überwachen und bei Fehlfunktionen der Zentraleinheit das Automatisierungssystem abschalten zu können.

Die Aufgabe wird durch ein Verarbeitungsmodul gelöst, das eine Alarmschnittstelle aufweist, die mit einer stromversorgungseinrichtung für die Prozeßstellglieder verbindbar ist. Dadurch ist im Fehlerfall ein zweiter Abschaltweg für die Prozeßstellglieder gegeben. Der erste Abschaltweg besteht in einer in den Peripherieeinheiten vorgesehenen Schaltergruppe mit einem elektronischen Schalter, der durch ein über eine Steuerleitung zwischen Zentraleinheit und Peripherieeinheit übermitteltes Sperrsignal geöffnet wird, und damit die Prozeßstellglieder von der Energieversorgung trennt.

Wenn das Verarbeitungsmodul eine mit dem Prozessor verbundene Programmierschnittstelle aufweist, kann das Verarbeitungsmodul völlig unabhängig von der Zentraleinheit programmiert werden.

Wenn das Verarbeitungsmodul mindestens eine mit dem Prozessor verbundene Kommunikationsschnittstelle aufweist, kann die Zentraleinheit auch von Kommunikationsaufgaben entlastet werden. Eine Kommunikation ist dabei insbesondere zwischen mehreren modularen Automatisierungssystemen erforderlich, die zusammen ein redundantes Automatisierungssystem bilden. Es ist aber auch die Ankopplung einer Bedien- und Beobachtungseinheit denkbar.

Weitere Vorteile und Einzelheiten ergeben sich aus der nachfolgenden Beschreibung eines Ausführungsbeispiels, anhand der Zeichnungen sowie in Verbindung mit den weiteren Ansprüchen. Dabei zeigen:
FIG 1 ein Verarbeitungsmodul und
FIG 2 ein modulares Automatisierungssystem.

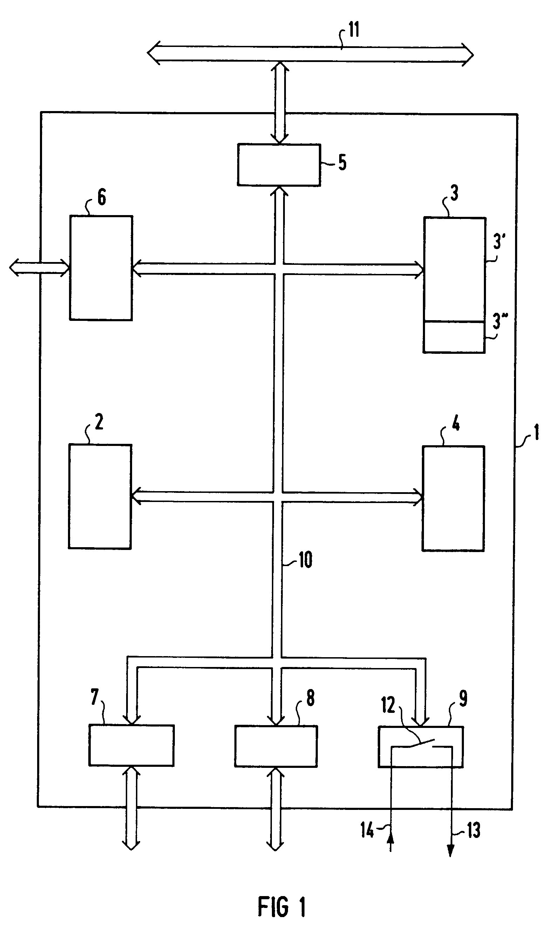

Gemäß FIG 1 besteht das Verarbeitungsmodul 1 im wesentlichen aus einem Prozessor 2, einem ROM-Speicher 3 und einem RAM-Speicher 4 sowie dem Buskoppelelement 5 und dem Zentraleinheitkoppelelement 6. Ferner weist das Verarbeitungsmodul 1 noch eine Programmierschnittstelle 7, eine Kommunikationsschnittstelle 8 und eine Alarmschnittstelle 9 auf. Die Elemente 2 bis 9 sind über den Modulbus 10 untereinander verbunden.

Die Koppelelemente 5, 6 sind beispielsweise sperrbare, bidirektionale Tristate-Treiber, über die das Verarbeitungsmodul 1 mit dem Gerätebus 11 bzw. mit einer in FIG 1 nicht dargestellten Zentraleinheit verbindbar ist. Der Prozessor 2 ist typischerweise ein Standard-Mikroprozessor, z.B. ein Siemens 80C167.

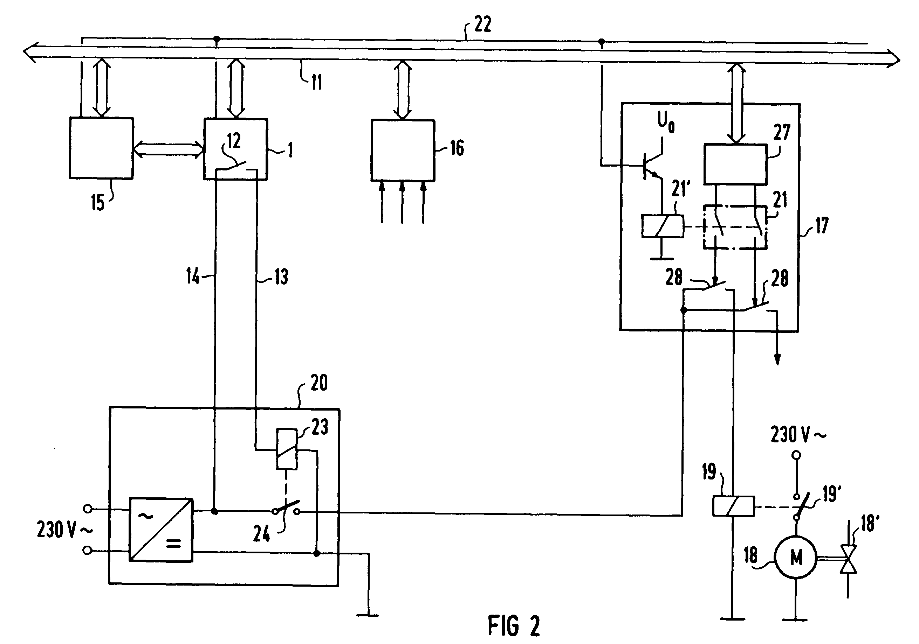

Im ROM 3 ist im Speicherbereich 3' das Betriebssystem für den Prozessor 2 abgespeichert. Im Speicherbereich 3' ist ein Compiler zum Übersetzen des Anwenderprogramms der Zentraleinheit in die Maschinensprache des Prozessors 2 abgespeichert. Darauf wird später in Verbindung mit FIG 2 noch näher eingegangen werden. Im RAM 4 ist das aktuell vom Prozessor 2 abzuarbeitende Programm abgespeichert. Ferner sind im RAM 4 über den Gerätebus 11 eingelesene Werte bzw. an den Gerätebus 11 auszugebende Werte, also das Prozeßabbild, abgespeichert. Im RAM 4 ist gegebenenfalls auch das übersetzte Anwenderprogramm der Zentraleinheit abgespeichert. Ferner sind im RAM sonstige Daten abgespeichert.

Über die Programmierschnittstelle 7 kann direkt ein neues Programm in das RAM 4 geladen werden, der Prozessor 2 also umprogrammiert werden. Es ist aber auch möglich, das Verarbeitungsmodul 1 über die Zentraleinheit und das Zentraleinheitkoppelelement 6 zu programmieren. Über die Kommunikationsschnittstelle 8 kommuniziert das Verarbeitungsmodul 1 mit anderen Geräten, beispielsweise mit dem Verarbeitungsmodul eines anderen modularen Automatisierungssystems. Die Alarmschnittstelle weist intern einen Schalter 12 auf, mittels dessen die Ausgabeleitung 13 mit der Eingabeleitung 14 verbunden werden bzw. die Ausgabeleitung 13 von der Eingabeleitung 14 getrennt werden kann. Über die Eingabeleitung 14 wird der Alarmschnittstelle 9 ein 24 Volt-Signal zugeführt. Auf die Bedeutung der Alarmschnittstelle 9 wird nachfolgend in Verbindung mit FIG 2 noch näher eingegangen werden.

Gemäß FIG 2 ist im vorliegenden Fall das modulare Automatisierungssystem als modulare speicherprogrammierbare Steuerung ausgebildet. Sie besteht aus der Zentraleinheit 15, dem Verarbeitungsmodul 1, mindestens einer Eingabebaugruppe 16 und mindestens einer Ausgabebaugruppe 17, die über den Gerätebus 11 miteinander verbunden ist. Im vorliegenden Fall ist die Zentraleinheit 15 sowohl direkt mit dem Gerätebus 11 verbunden als auch indirekt über das Verarbeitungsmodul 1.

Über die Eingabebaugruppe 16 sind der speicherprogrammierbaren Steuerung Eingangssignale von einem in FIG 2 nicht dargestellten technischen Prozeß bzw. einer technischen Anlage zuführbar. Über die Ausgabebaugruppe 17 sind Ausgangssignale an Prozeßstellglieder wie beispielsweise den Motor 18 ausgebbar, der ein Ventil 18' steuert.

Zur Ausgabe der Ausgabesignale werden der Logikschaltung 27 der Ausgabebaugruppe 17 die auszugebenden Signale von der Zentraleinheit 15 vorgegeben. Die Logikschaltung 27 steuert daraufhin jeden Schalter 28 entsprechend dem im zugeordneten auszugebenden Signal an. Dadurch wird das Relais 19 erregt oder nicht und dementsprechend der Schalter 19' geschlossen oder nicht.

Alle Schalter 28 der Ausgabebaugruppe 17 werden über die Stromversorgungseinrichtung 20 mit Energie versorgt. Um im Anforderungsfall ein Abschalten aller Prozeßstellelemente zu gewährleisten, weist die Ausgabebaugruppe 17 eine Schaltergruppe 21 auf. Die Schalter dieser Schaltergruppe 21 werden durch Abfallen des Relais 21' geöffnet, wenn der Ausgabebaugruppe 17 von der Zentraleinheit 15 über die Steuerleitung 22 ein Sperrsignal übermittelt wird. Die Schaltergruppe 21 trennt dann alle Ausgänge der Ausgabebaugruppe 17 von der Logikschaltung 27.

Gemäß einer Ausführungsform der Erfindung wird vor Beginn der Programmabarbeitung durch die Zentraleinheit 15 das Anwenderprogramm von der Zentraleinheit 15 in das Verarbeitungsmodul 1 kopiert. Nach dem Kopieren wird das Anwenderprogramm mittels des im Speicherbereich 3" abgespeicherten Compilers in die Maschinensprache des Prozessors 2 übersetzt. Das Verarbeitungsmodul 1 ist daher ebenso wie die Zentraleinheit 15 in der Lage, das Anwenderprogramm abzuarbeiten. Das Verarbeitungsmodul 1 ist dadurch in der Lage, die Zentraleinheit 15 zu überwachen. Dies geschieht wie folgt:

Wenn die Zentraleinheit 15 ihr Anwenderprogramm abarbeitet, arbeitet das Verarbeitungsmodul 1 parallel mit. Wenn die Zentraleinheit 1 Daten von der Eingabebaugruppe 16 einliest, liest das Verarbeitungsmodul 1 die Daten mit ein. Alternativ könnte das Verarbeitungsmodul 1 auch die von der Zentraleinheit 15 eingelesenen Eingangssignale auslesen. Wenn die Zentraleinheit 15 Daten an die Ausgabebaugruppe 17 ausgibt, werden die Ausgabesignale vom Verarbeitungsmodul 1 mit eingelesen. Das Verarbeitungsmodul vergleicht dann die eingelesenen Ausgabesignale mit den vom Verarbeitungsmodul 1 errechneten Ausgabesignalen.

Solange die vom Verarbeitungsmodul 1 errechneten Ausgabesignale mit der Zentraleinheit 15 ausgegebenen Ausgabesignale übereinstimmen, hält das Verarbeitungsmodul 1 den Schalter 12 geschlossen. Wenn dagegen eine Ungleichheit bemerkt wird, liegt eine Fehlfunktion der Zentraleinheit 15 vor. Die Fehlfunktion kann dabei durch eine fehlerhafte Auslegung der Zentraleinheit 15 oder einen Defekt in der Zentraleinheit 15 verursacht sein. In jedem Fall wird aber durch das Verarbeitungsmodul 1 der Fehler bemerkt und der Schalter 12 geöffnet. Dadurch fällt das Relais 23 ab, so daß der Schalter 24 öffnet. Dadurch wird die Stromversorgungseinrichtung 20 von den Ausgängen der Ausgabebaugruppe 17 getrennt. Es steht folglich ein zweiter, von der Abschaltung über die Steuerleitung 22 und die Schaltergruppe 21 völlig unabhängiger Abschaltweg für die Ausgänge zur Verfügung. Die Sicherheit des Automatisierungssystems wird dadurch beträchtlich erhöht.

Bei modularen Automatisierungssystemen kann also die Zentraleinheit 15 aufgrund des diversitär aufgebauten Verarbeitungsmoduls 1 auf systematische Fehler überwacht werden. Das Verarbeitungsmodul 1 kann dabei selbstverständlich sowohl eine separate Baugruppe sein als auch mit der Zentraleinheit 15 eine bauliche Einheit bilden.

## Patentansprüche

1. Verarbeitungsmodul (1) für ein modulares Automatisierungssystem, z. B. eine modulare speicherprogrammierbare Steuerung, wobei das Automatisierungssystem aus einer Zentraleinheit (15) und der Zentraleinheit (15) untergeordneten Peripherieeinheiten (16,17), z. B. Ein-/Ausgabebaugruppen (16,17), besteht, wobei die Peripherieeinheiten (16,17) über einen Gerätebus (11) miteinander koppelbar sind, wobei das Verarbeitungsmodul (1) einen Prozessor (2), einen Speicher (3,4), ein an den Gerätebus (11) ankoppelbares sperrbares Buskoppelelement (5) und ein an die Zentraleinheit (15) ankoppelbares sperrbares Zentraleinheitkoppelelement (6) aufweist, die über einen verarbeitungsmodulinternen Modulbus (10) miteinander verbunden sind, wobei das Verarbeitungsmodul (1) mindestens eine - vorzugsweise über den Modulbus (10) - mit dem Prozessor (2) verbundene Alarmschnittstelle aufweist, die mit einer Stromversorgungseinrichtung (20) für Prozeßstellglieder (19) verbindbar ist.

2. Verarbeitungsmodul nach Anspruch 1, **dadurch gekennzeichnet**, daß es eine mit dem Prozessor (2) verbundene Programmierschnittstelle (7) aufweist.

3. Verarbeitungsmodul nach Anspruch 2, **dadurch gekennzeichnet**, daß die Programmierschnittstelle (7) mit dem Prozessor (2) über dem Modulbus (10) verbunden ist.

4. Verarbeitungsmodul nach einem der obigen Ansprüche, **dadurch gekennzeichnet**, daß es mindestens eine mit dem Prozessor (2) verbundene Kommunikationsschnittstelle (8) aufweist.

5. Verarbeitungsmodul nach Anspruch 4, **dadurch gekennzeichnet**, daß die Kommunikationsschnittstelle (8) mit dem Prozessor (2) über den Modulbus (10) verbunden ist.

6. Modulares Automatisierungssystem, z. B. modulare speicherprogrammierbare Steuerung, zur Steuerung einer technischen Anlage (25) bzw. eines technischen Prozesses über Prozeßsensorelemente und Prozeßstellglieder (19), bestehend aus einer Zentraleinheit (15), einem Verarbeitungsmodul (1) nach einem der obigen Ansprüche und Peripherieeinheiten (16,17), wobei die Peripherieeinheiten (16,17) über einen Gerätebus (11) miteinander gekoppelt sind, wobei das Verarbeitungsmodul (1) über sein Buskoppelelement (5) an den Gerätebus (11) und über sein Zentraleinheitkoppelelement (6) an die Zentraleinheit (15) angekoppelt ist und wobei die Alarmschnittstelle (9) des Verarbeitungsmoduls (1) mit einer Stromversorgungseinrichtung (20) für die Prozeßstellglieder (19) verbindbar ist.

7. Modulares Automatisierungssystem nach Anspruch 6, **dadurch gekennzeichnet**, daß die Zentraleinheit (15) auch direkt an den Gerätebus (11) angekoppelt ist.

8. Überwachungsverfahren für ein modulares Automatisierungssystem, das aus einer Zentraleinheit (15) und mit der Zentraleinheit (15) über einen Gerätebus (11) verbundenen Peripherieeinheiten (16,17) besteht, an die Prozeßsensorelemente und Prozeßstellglieder (19) angeschlossen sind,
- wobei die Zentraleinheit (15) zyklisch Eingangssignale von den Peripherieeinheiten (16,17) einliest, anhand eines Anwenderprogramm aus den Eingangssignalen Ausgangssignale ermittelt und diese an die Peripherieeinheiten (16,17) ausgibt,
- wobei einem Verarbeitungsmodul (1) die von der Zentraleinheit (15) eingelesenen Eingangssignale mitgeteilt werden bzw. das Verarbeitungsmodul (1) die Eingabesignale ebenfalls zyklisch einliest,
- wobei das Verarbeitungsmodul (1) ebenfalls anhand des Anwenderprogramms aus den Eingangssignalen Ausgangssignale ermittelt und diese Ausgangssignale mit den von der Zentraleinheit (15) ermittelten Ausgangssignalen vergleicht,
- wobei das Verarbeitungsmodul (1) bei Bemerken einer Fehlfunktion der Zentraleinheit (15) die Prozeßstellglieder (19) unabhängig von der Zentraleinheit (15) über einen gerätebusunabhängigen Abschaltweg abschaltet.

## Claims

1. A processing module (1) for a modular automation system, for example a modular stored-programmable control system, wherein the automation system consists of a central unit (15) and peripheral units (16, 17) subordinate to the central unit (15), for example input/output assemblies (16, 17), which peripheral units (16, 17) can be coupled to one another via a device bus (11), and wherein the processing module (1) comprises a processor (2), a memory (3, 4), a blockable bus coupling element (5) capable of being coupled to the device bus (11), and a blockable central unit coupling element (6) capable of being coupled to the central unit (15), which are connected to one another via a module bus (10) internal to the processing module, and wherein the processing module (1) has at least one alarm interface which is connected to the processor (2) - preferably via the module bus (10) - and which can be connected to a current supply device (20) for process control elements (19).

2. A processing module according to Claim 1, characterised in that it comprises a programming interface (7) connected to the processor (2).

3. A processing module according to Claim 2, characterised in that the programming interface (7) is connected to the processor (2) via the module bus (10).

4. A processing module according to one of the above claims, characterised in that it comprises at least one communications interface (8) connected to the processor (2).

5. A processing module according to Claim 4, characterised in that the communications interface (8) is connected to the processor (2) via the module bus (10).

6. A modular automation system, for example a modular stored-programmable control system, for controlling a technical plant (25) or a technical process via process sensor elements and process control elements (19), consisting of a central unit (15), a processing module (1) according to one of the above claims, and peripheral units (16, 17), which peripheral units (16, 17) are coupled to one another via a device bus (11), wherein the processing module (1) is coupled via its bus coupling element (5) to the device bus (11) and via its central unit coupling element (6) to the central unit (15) and wherein the alarm interface (9) of the processing module (1) can be connected to a current supply device (20) for the process control elements (19).

7. A modular automation system according to Claim 6, characterised in that the central unit (15) is also directly coupled to the device bus (11).

8. A monitoring process for a modular automation system which consists of a central unit (15) and peripheral units (16, 17) which are connected to the central unit (15) via a device bus (11) and to which process sensor elements and process control elements (19) are connected, wherein
- the central unit (15) cyclically reads in input signals from the peripheral units (16, 17), calculates output signals from the input signals on the basis of an application program, and outputs these output signals to the peripheral units (16, 17),
- the input signal read in by the central unit (15) are communicated to a processing module (1) or the processing module (1) likewise cyclically reads in the input signals,
- the processing module (1) likewise calculates output signals from the input signals on the basis of the application program and compares these output signals with the output signals calculated by the central unit (15), and
- upon noting a malfunction of the central unit (15) the processing module (1) disconnects the process control elements (19) independently of the central unit (15) via a disconnect path which is independent of the device bus.

## Revendications

1. Module de traitement (1) pour un système d'automatisation modulaire, par exemple pour une commande modulaire par programme enregistré, le système d'automatisation étant constitué d'une unité centrale (15) et d'unités périphériques (16, 17) subordonnées à l'unité centrale (15), par exemple des modules d'entrée et de sortie (16, 17), les unités périphériques (16, 17) pouvant être connectées entre elles par l'intermédiaire d'un bus d'appareil (11), le module de traitement (1) comportant un processeur (2), une mémoire (3, 4), un élément de connexion de bus (5) qui peut être bloqué et qui peut être connecté au bus d'appareil (11) et un élément de connexion d'unité centrale (6) qui peut être bloqué et qui peut être connecté à l'unité centrale (15), tous ces éléments étant reliés entre eux par l'intermédiaire d'un bus de module (10) interne au module de traitement, le module de traitement (1) comportant au moins une interface d'alarme, qui est reliée au processeur (2) - de préférence par l'intermédiaire du bus de module (10) - et qui peut être reliée à un dispositif d'alimentation en courant (20) destiné à des organes de réglage de processus (19).

2. Module de traitement selon la revendication 1, caractérisé par le fait qu'il comporte une interface de programmation (7) reliée au processeur (2).

3. Module de traitement selon la revendication 2, caractérisé par le fait que l'interface de programmation (7) est reliée au processeur (2) par l'intermédiaire du bus de module (10).

4. Module de traitement selon l'une des revendications précédentes, caractérisé par le fait qu'il comporte au moins une interface de communication (8) reliée au processeur (2).

5. Module de traitement selon la revendication 4, caractérisé par le fait que l'interface de communication (8) est reliée au processeur (2) par l'intermédiaire du bus de module (10).

6. Système d'automatisation modulaire, par exemple commande modulaire par programme enregistré, destiné à la commande d'une installation technique (25) ou d'un processus technique par l'intermédiaire d'éléments capteurs de processus et d'organes de réglage de processus (19), constitué d'une unité centrale (15), d'un module de traitement (1) selon l'une des revendications précédentes et d'unités périphériques (16, 17), les unités périphériques (16, 17) étant connectées entre elles par l'intermédiaire d'un bus d'appareil (11), le module de traitement (1) étant connecté par l'intermédiaire de son élément de connexion de bus (5) au bus d'appareil (11) et par l'intermédiaire de son élément de connexion d'unité centrale (6) à l'unité centrale (15) et l'interface d'alarme (9) du module de traitement (1) pouvant être reliée à un dispositif d'alimentation en courant (20) destiné aux organes de réglage de processus (19).

7. Système d'automatisation modulaire selon la revendication 6, caractérisé par le fait que l'unité centrale (15) est aussi connectée directement au bus d'appareil (11).

8. Procédé de contrôle d'un système d'automatisation modulaire, qui est constitué d'une unité centrale (15) et d'unités périphériques (16, 17) qui sont reliées à l'unité centrale (15) par l'intermédiaire d'un bus d'appareil (11) et auxquelles des éléments capteurs de processus et des organes de réglage de processus (19) sont raccordées,
- l'unité centrale (15) lisant en cycle des signaux d'entrée des unités périphériques (16, 17), déterminant des signaux de sortie à partir des signaux d'entrée et à l'aide d'un programme d'application et délivrant ces signaux de sortie aux unités périphériques (16, 17),
- un module de traitement (1) étant informé des signaux d'entrée lus par l'unité centrale (15) ou le module de traitement (1) lisant également en cycle les signaux d'entrée,
- le module de traitement (1) déterminant également des signaux de sortie à partir des signaux d'entrée et à l'aide du programme d'application et comparant ces signaux de sortie aux signaux de sortie déterminés par l'unité centrale (15),
- le module de traitement (1), lorsqu'il remarque un fonctionnement défectueux de l'unité centrale (15), arrêtant les organes de réglage de processus (19) indépendamment de l'unité ce'ntrale (15) par l'intermédiaire d'un moyen d'arrêt indépendant du bus d'appareil.
